# EUROPEAN PATENT APPLICATION

(11) **EP 3 556 552 A1**
(43) Date of publication of application: **23.10.2019**
(21) Application number: 18168471.3
(22) Date of filing: 20.04.2018
(51) Int. Cl.: B32B 27/08, B32B 27/16, B32B 27/32, G02B 21/34, G01N 1/06, G01N 1/28

(54) **PLASTIC FILM USED FOR DEPOSITING AND TRANSPORTING OF THIN SLICES OF SAMPLES**

(71) Applicant: Universität Heidelberg, 69117 Heidelberg (DE)
(72) Inventor: Horstmann, Heinrich, 68723 Plankstadt (DE)
(74) Representative: Reiser & Partner Patentanwälte mbB

(57) **Abstract**

A plastic film (5) used for the purpose of depositing and transporting of thin slices of samples in the field of light microscopy.

## Description

Plastic film used in the field of light microscopy.

For analysing samples in a light microscope, it is known to prepare a sample in such a way that thin slices can be prepared therefrom using a microtome. For example, this may take place in that the sample is treated with an epoxy resin in such a way that said sample solidifies. Subsequently, thin slices can be produced from the solidified sample using a microtome.

A microtome comprises a knife having a blade, for example made of a diamond, which is guided along on the sample in such a way that thin slices are cut off from the sample. In this context, it is known to move the knife either in translation or in a combination of a translational and an oscillatory movement. In the case of the combination of translational and oscillatory movement, a thin slice can be prevented from adhering to the blade.

A thin slice for analysing tissue samples, for example of tumour cells, shall typically have a thickness of 0.2 µm to 5 µm. These thin slices are applied to a carrier and subsequently analysed in a light microscope. In this context, the thin slices are supplied to a transmitted light microscope and images can be acquired by a microscope camera. The prepared photographs of the thin slices are stored electronically and can be processed using appropriate software in such a way that a layered computer image of the sample can be produced on the basis of a series of thin slice photographs. As a result, the sample can be considered and analysed three-dimensionally as a digital layer model.

It is known to arrange thin slices on a sample holder and to deposit them in a light microscope for analysis to be able to supply a series of thin slices to the analysis in a light microscope. Furthermore, it is known to provide holders in the form of a glass slide. However, on a single glass slides only a limited number of thin slices can be stored simultaneously. Therefore, an arrangement of thin slices on a glass slide requires the exchange of glass slides, if images of many thin slices need to be analysed. For example, it is necessary to analyse many slices in a three-dimensional reconstruction of the sample. This method is particularly time-consuming. Further, it is not possible to analyse many samples continuously and automatically.

The object of the invention is to provide a system which offers a simple and cost-effective option for preparing thin slices and analysing them in a light microscope.

This object is achieved by the features of claim 1. The dependent claims refer to advantageous embodiments.

According to the invention, it was found that it is advantageous to use a plastic film for the purpose of transporting thin slices of samples in the field of light microscopy. The advantages of using a transparent plastic film for transportation purposes in the field of light microscopy are described below.

An advantageous microtome comprises a blade for cutting thin slices from a sample, a sample holder for supplying the sample to the blade, and a means for receiving the thin slices, the thin slices being deposited on a film which is unwound from a first holder and wound up together with the thin slices on a second holder. The microtome thus provides that thin slices are deposited on a film continuously. As a result, a particularly large number of thin slices can be prepared and deposited on a single, one-piece film. The work can be carried out continuously, without interruptions and automatically.

In tests, in this context it has surprisingly been found that a plastic film is extremely well suited for acting as a film for depositing and transporting thin slices in the field of microscopy, especially light microscopy. In this context, it has been shown that a plastic film made of polypropylene is extremely well suited for acting as a carrier for depositing and transporting the thin slices.

With regard to the transmitted light microscopy it is advantageous if the plastic film is transparent. A transparent plastic film ensures a high light transmission. Thus, a transparent plastic film is well suited for the use of transporting thin slices in the field of transmitted light microscopy.

The film can be made of an oriented polypropylene. When the film is extruded, the film can be stretched either in one direction or in both, machine direction and across machine direction. When the film is stretched in both directions, the film is biaxially oriented. The stretching process improves the mechanical properties, especially the tensile strength. Furthermore, the water vapor permeability is reduced. In case of the biaxial oriented film, the advantageous properties are independent of direction.

The film can comprise at least two layers. Due to this embodiment, the film is arranged as a multilayer film. It is advantageous that each layer can have optimized properties with regard to different requirements.

In a first embodiment, the first layer can be made of a biaxially oriented polypropylene and the second layer can be made of a polypropylene.

In a further embodiment, the film can comprise three layers, wherein the first layer can be made of a biaxially oriented polypropylene, wherein the first layer can be covered by a second layer and a third layer, wherein the second layer and the third layer can be made of a polypropylene.

The samples can be placed on the free surface of the first layer.

The film can be hydrophilically furnished. The hydrophilic furnishing ensures that the samples are deposited on the film securely and without wrinkles and adhere thereto.

The surface can be treated by corona treatment. Corona treatment is a surface modification technique that uses low temperature corona discharge plasma to impart changes in the properties of a surface. The film is passed through the corona plasma in order to change the surface energy of the material. Due to the corona treatment, the film is hydrophilically furnished and the samples adhere to the surface of the film.

The thickness of the film can be between 20 µm and 40 µm. A film with a thickness between 20 µm and 40 µm is cost-effective and has improved mechanical properties.

A supply means may be provided which guides the film to the blade. The supply means comprising a first holding on which a first spool is rotatably arranged. The film is wound up on the first spool, and is unwound from the first spool during the preparation of thin slices. The supply means further comprises a second holder for receiving the film provided with the samples. During the preparation of thin slices, the film is unwound from the first spool, guided towards the blade, provided with thin slices there, guided towards the second holder and wound up there. The film may be removed from the supply means to a light microscope for analysing the thin slices.

In an advantageous embodiment, the first spool is formed as a double-flanged spool. In this embodiment, the film is held securely between the flanges of the spool.

The supply means may further have a direction change. The direction change is located in the direct proximity of the blade. There, the film unwound from the first spool changes direction and is guided towards the second holder. The thin slices are deposited on the film in the region of the direction change. In an advantageous embodiment, the direction change is a rod, preferably of high-grade steel, fastened in the supply means. The film is thus guided around the rod.

The supply means may further have a container for receiving liquid. In this context, the container may be arranged in the microtome in such a way that the blade is also wetted at least in part with the liquid received in the container. The thin slices prepared by the blade likewise come into contact with and are wetted by the liquid.

Preferably, the film is also passed through the liquid and wetted with liquid. Because both the thin slices and the film are wetted with liquid, this results in excellent adhesion of the thin slices on the film. Because the blade is wetted at least in part with liquid, the thin slices can be prevented from adhering to the blade. Therefore, the container for receiving the liquid is attached directly to the knife. The thin slices float on the surface of the meniscus and are removed, floating, from the film from the surface.

In order for the film also to be wettable with liquid from the container, the direction change preferably takes place in such a way that the film is wetted with liquid before the thin slices are received. For this purpose, the direction change is preferably assigned directly to the container and fastened in the container in such a way that at least part of the direction change is located below the meniscus. This ensures that the film is passed through the liquid and thus wetted with liquid before receiving thin slices.

The supply means preferably has a drive motor which brings about the winding and unwinding of the film. An advantageous drive motor is an electric stepper motor. A stepper motor makes uniform transport of the film possible. To achieve a slow feed rate, the drive motor may be provided with a transmission.

Distilled water, for example, may be considered as the liquid.

Preferably, the microtome is provided with an arrangement for generating an initial tension of the belt. The arrangement ensures that the film is moving against a resistance, with the result that the film is mechanically pre-stressed at all times. This is advantageous as the arrangement is ensuring that the film is uniformly launched and that the samples can be deposited on the film free from creases. Preferably, the arrangement is assigned to the spool from which the film is wound up. The arrangement is preferably formed as a torque brake. A torque brake, for example, can be formed as a gravity brake or as an eddy current brake.

A light microscope according to the invention comprises a sample supply means, the sample supply means being formed to supply the thin slices located on the wound-up film to the microscope slide.

The sample supply means comprises a holder for receiving a second spool on which the wound-up film having the thin slices deposited thereon is located. A holder for an empty spool, on which the film provided with the thin slices is wound up again after being read out by the light microscope, is further located on the sample supply means.

In this context, the sample supply means is preferably formed in such a way that the thin slices arranged on the film can be supplied to the objective of the light microscope continuously. For this purpose, the sample supply means comprises a stepper motor. The stepper motor is operatively connected to the empty spool, and brings about continuous unwinding of the film from the second spool in a manner, that guaranties a constant and optimal working distance between film and objective. In this context, the film may be unwound in such a way that the unwinding is temporarily stopped when a thin slice is being imaged by the microscope camera. To achieve a slow feed rate, a transmission may be assigned to the stepper motor.

The arrangement for supplying samples is preferably provided with an arrangement for generating initial tension of the belt. The arrangement ensures that the film is moving against a resistance, with the result that the film is mechanically pre-stressed at all times. This is advantageous as the arrangement is ensuring a constant contact pressure of the film on the plateau which is arranged directly underneath the object lens. The constant contact pressure is adding to having a constant operating distance between the sample and the objective. Preferably, the arrangement is assigned to the spool from which the film is wound up. The arrangement is preferably formed as a torque brake. A torque brake, for example, can be formed as a gravity brake or as an eddy current brake.

In the arrangement according to the invention, the film provided with the thin slices is wound up and supplied to the light microscope in roll form. There, the wound-up film is unwound by the sample supply means and wound up again after being read out by the light microscope, in such a way that the thin slices are made available to the objective for reading out.

Another arrangement according to the invention of the light microscope makes it possible to supply thin slices in a particularly rapid and simple manner on a large-sized glass slide providing hundreds of thin slices. Therefore strips of the film carrying the thin slices are mounted on a large-sized glass slide by the use of glue, e.g. Neo-Mount, a commercial product of the company Merck KGaA and covered with a cover slip again by the use of a glue e.g. Neo-Mount. In this preferred arrangement it is possible to increase the resolving power of a microscope by the use of oil immersion.

In the method for preparing thin slices using a microtome, in a first step a sample is supplied to a blade which cuts off thin slices from the sample, and in a second step the thin slices are deposited on a film which is unwound from a first spool and wound up together with the thin slices on a second holder.

In a method according to the invention for analysing thin slices in a light microscope, a film - provided with thin slices and wound up - is unwound and wound up again by means of a sample supply means, the thin slices deposited on the film being supplied to the objective between the unwinding and the winding.

Some embodiments of the microtome and the light microscope according to the invention are described in greater detail in the following. The drawings show in each case schematically:
Fig. 1 is a three-dimensional drawing of a microtome;
Fig. 2 shows the supply means in detail;
Fig. 3 shows the drive of the second holder in detail;
Fig. 4 is a front view of a sample supply means;
Fig. 5 is a plan view of a sample supply means;
Fig. 6 shows in detail the torque brake for the first holder;
Fig. 7 shows in detail an alternative torque brake.

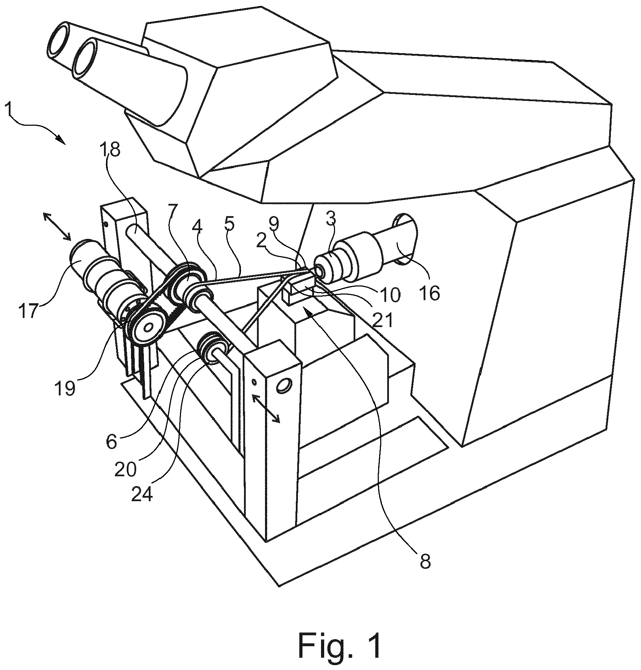

Fig. 1 shows a microtome 1 suitable for preparing thin slices and ultrathin slices of samples having a thickness of approximately 1 µm. In this context, the microtome 1 is in particular suitable for splitting up samples in the form of tissue samples which have previously been stabilised, for example, using epoxy resin.

The microtome 1 comprises a blade 2 in the form of a diamond knife for cutting thin slices from a sample, a sample holder 3 for supplying the sample to the blade 2, and a means 4 for receiving the thin slices, the means 4 being a film 5 on which the thin slices are deposited. In the present embodiment, the sample holder 3 along with the sample fastened thereon is moved in translation by means of an electric motor 16, the sample sliding along on the blade 2 and thin slices being cut off from the sample.

The film 5 is a continuous film which is unwound from a first spool 6 attached to a first holder 24 and wound up together with the thin slices on a second holder 7. The film 5 is a plastic film made of polypropylene. The film 5 comprises three layers. The first layer is made of a biaxially oriented polypropylene. The first layer is covered by a second layer and a third layer, the second layer and the third layer are made of a polypropylene. The thickness of the film 5 is 30 µm. The film 5 is transparent and has a high light transmission.

The samples are placed on the free surface of the first layer. To enhance the adhesion of the samples, the film 5 is hydrophilically furnished. For this, the surface of the film - the surface of the first layer - is treated by corona treatment.

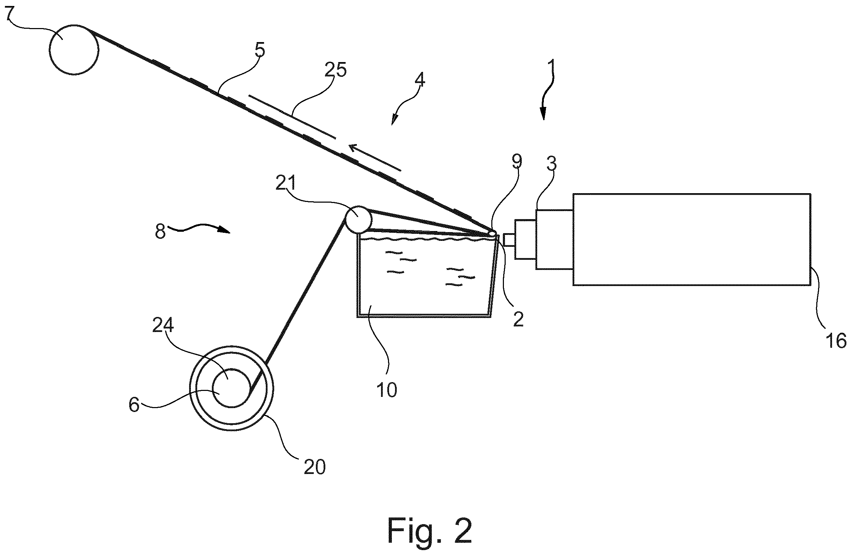

Fig. 2 shows in detail the supply means 8 disclosed in Fig. 1, which guides the film 5 to the diamond knife of the blade 2. In this context, the supply means 8 has a direction change 9 in the form of a high-grade steel rod. In the present case, the direction change 9 has a diameter of 1 mm. The supply means 8 further comprises a container 10 for receiving liquid, the film 5 changing direction in such a way that the film 5 is wetted with liquid before receiving thin slices. The blade 2 is likewise assigned to the container 10. After cutting, the thin slices are initially transported on the meniscus and finally removed from the film 5. In this context, both the thin slices and the film 5 are wetted with liquid. A further direction change 21 causes the film 5 to change direction in such a way that the film 5 is guided via the container and wetted with liquid in the region of the direction change 9.

A heating means 25 for drying the thin slices deposited on the film 5 is assigned to the supply means 8. In an advantageous embodiment, the heating means 25 comprises a Peltier element, which is heated in parts by applying an electrical voltage. The thermal radiation produced as a result is sufficient to dry the thin slices and the film 5 prior to winding up. In this context, it is also advantageous that higher process speeds are possible.

In the method for preparing thin slices using a microtome 1, in a first step a sample is supplied to a blade 2 which cuts off thin slices from the sample, and in a second step the thin slices are deposited on a film 5 which is unwound from a first spool 6 and wound up together with the thin slices on a second holder 7.

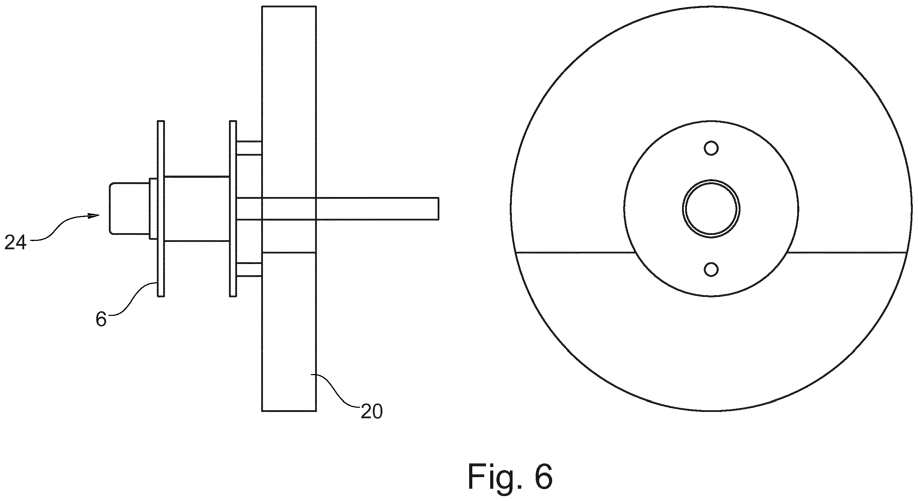

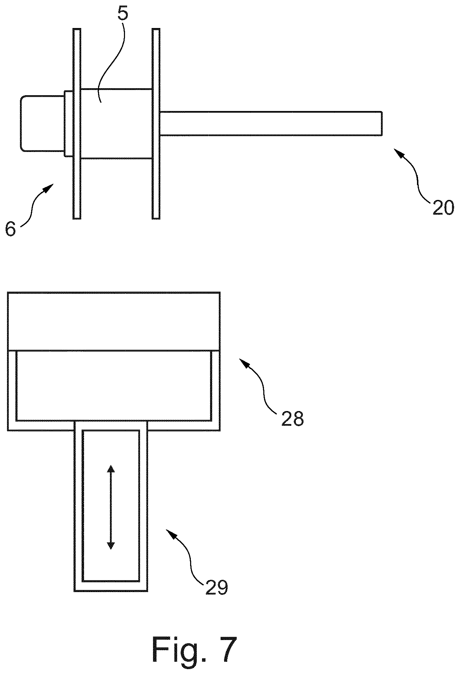

The first spool 6 is provided with a torque brake 20 in the form of an eddy current brake (Fig. 7). Alternatively, the first spool can be provided with a torque brake 20 in the form of a disc filled with liquid (Fig. 6).

Further, it is conceivable to provide initial tension of the film by modification of the turning resistance, for example by clamping of the bearings.

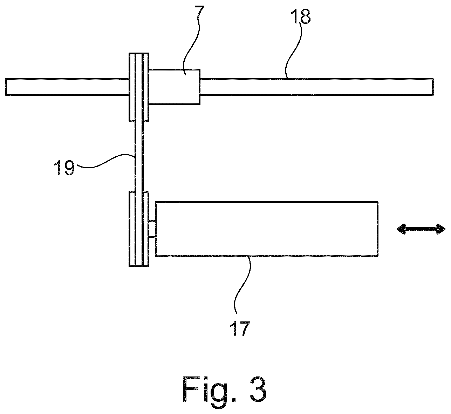

Fig. 3 shows in detail the drive disclosed in Fig. 1, which winds the film 5 from the first spool 6 onto the second holder 7. The second holder 7 is operatively connected to a stepper motor 17. Both the first spool 6 and the second holder 7 are rotatably arranged on a shaft 18, the stepper motor 17 being connected to the second holder 7. The stepper motor 17 acts on the second holder 7 directly via a toothed belt drive 19. This ensures that the film 5 is wound onto the second holder 7 uniformly and continuously. A high-ratio transmission is assigned to the stepper motor 17. In the present embodiment, this ratio is 2,070:1.

In the present embodiment, the shaft 18 on which the second holder 7 is arranged is rigidly fastened in the supply means 8, and the second holder 7 is rotatably mounted on the shaft 18. In this embodiment, the toothed belt drive 19 is assigned to the second holder 7 and also rotatably mounted on the shaft 18.

In the present embodiment, the stepper motor 17 is mounted in the supply means 8 in such a way that said motor can be displaced parallel to the axis. Together with the stepper motor 17, the first holder 24 comprising the first spool 6 and the second holder 7 may also be displaced parallel to the axis. As a result, the position of the film 5 relative to the blade 2 can be displaced in such a way that the film 5 is always optimally positioned to receive the samples.

The arrangement comprising the first spool 6, the second holder 7, the supply means 8, the direction change 9, the stepper motor 17, the shaft 18, the torque brake 20 and the first holder 24 is rigidly connected to the microtome 1. Thus, the direction change 9 is firmly assigned to the blade 2. This ensures a constant distance - independently from external influences - between the direction change 9, with the film 5 redirected on it, and the blade 2.

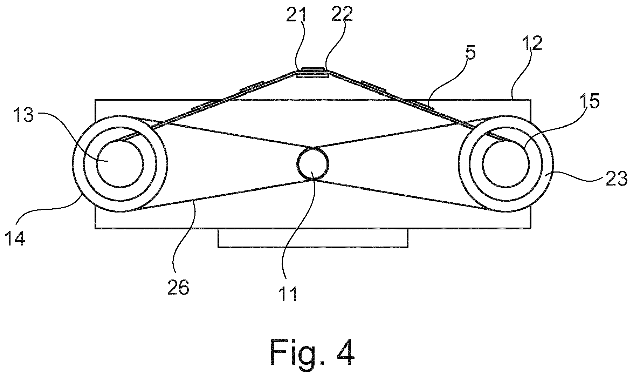

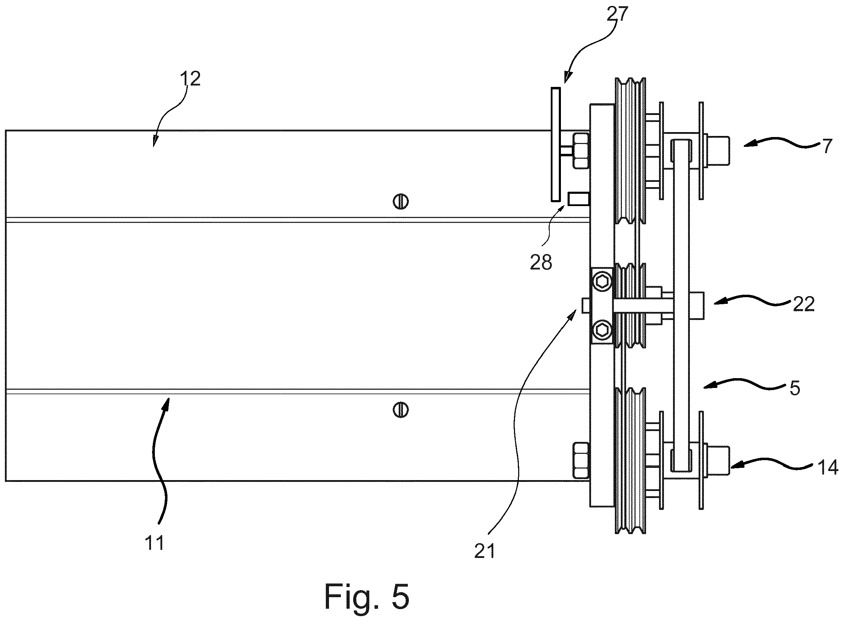

Figs. 4 and 5 show a sample supply means 12 which can be arranged on the microscope slide of a light microscope. In this context, the sample supply means 12 is formed to supply the thin slices located on the wound-up film 5 on the second holder 7 to the microscope slide. In this context, the slices are supplied continuously.

The sample supply means 12 has a first retainer 13 for an empty spool 14 and a second retainer 15 for a second spool 23. The film 5 provided with the samples is located on the second spool 23. For this purpose, in an intermediate step, the film 5 may be wound up from the second holder 7 onto the second spool 23.

The second retainer 15 is provided with a metal disc 27 which is operatively connected to a permanent magnet 28. When the second spool 23 is rotating, the permanent magnet 28 induces an eddy current inside of the metal disc 27. Due to the ohmic resistance, part of the yielded energy is transformed into heat. Thus, the permanent magnet 28 and the metal disc 27 form a torque brake, more precisely an eddy current brake. The result is a resistance against rotation of the second spool 23 which then again results in an initial tension of the film 5 so that the film can be unwound uniformly. The distance between the permanent magnet 28 and metal disc 27 may be adjustable. The empty spool 14 is operatively connected to a second electric motor 11 so as to wind the film 5 from the second spool 23 onto the empty spool 14 and thus to supply the thin slices to the microscope slide. The second electric motor 11 is provided with a high-ratio transmission. In the present case, the ratio is 2,070:1. The force transmission from the second electric motor 11 to the empty spool 14 takes place by way of a traction mechanism drive; in this case by means of a second toothed belt drive 26.

The sample supply means 12 is configured in such a way that the thin slices arranged on the film 5 can be supplied to the microscope slide continuously. For this purpose, the sample supply means 12 comprises a second electric motor 11 in the form of a stepper motor. The second electric motor 11 is operatively connected to the empty spool 14, and brings about continuous unwinding of the film 5 from the second spool 23. A second direction change 21 is arranged between the second spool 23 and the empty spool 14. The film 5 is guided via the second direction change 21, the second direction change 21 having a plateau 22, the analysing of the samples taking place on the plateau 22. The plateau is formed by a horizontally orientated support made of glass and ensures a constant and optimal working distance between objective of the light microscope and film.

In the method for analysing thin slices in a light microscope, a film 5 - provided with thin slices and wound-up - is unwound and wound up on an empty spool 14 by means of a sample supply means 12, the thin slices deposited on the film 5 being supplied to the microscope slide during the unwinding from the second spool 23 and the winding onto the empty spool 14.

The spools 6, 14, 23 are formed as double-flanged spools.

Fig. 6 shows in detail the first spool 6 which is provided with a torque brake 20. In order for the film 5 also to be able to be unwound uniformly from the first spool 6, a torque brake 20, which is rotationally engaged with the first holder 24 or the first spool 6, is arranged on the shaft on which the first spool 6 is mounted.

In an advantageous embodiment, the torque brake 20 consists of a disc which is fastened to the shaft and provided with an annular cavity. The cavity is filled at least in part with a liquid, in the present case with a mixture of water and glycerol.

If the torque brake 20 is set in rotation together with the first spool 6, the disc moves, whilst the liquid remains in place. This results in a slight friction of the liquid on the inner wall of the cavity and a constant restoring force, leading to a constant slight resistance to the rotational movement. This resistance is sufficient for the film 5 to have a small bias and be unwound uniformly from the first spool 6. As a result of the liquid / solid tribological pairing, there is also no stick-slip effect, which would lead to a jerky movement of the film 5. As a result of the arrangement of the torque brake 20, a uniform tensile stress of the film 5 is always provided, leading to uniform unwinding and winding of the film 5. Such a torque brake 20 can be referred to as a gravity torque. Against the background of low torques needed for moving of the film, the torque brake is particularly advantageous as it is generating a low and consistent torque.

Fig. 7 depicts an alternative embodiment of a torque brake. In this embodiment, the first spool 6 is made of electrically conductive material. A magnet 28, here a permanent magnet 28, is assigned to the first spool 6, the permanent magnet 28 being attached adjustably on the microtome 1 relative to the first spool 6. The adjustment of the permanent magnet 28 is realized by a height adjustment 29 on which the permanent magnet 28 is arranged. When the first spool 6 is rotating, the permanent magnet 28 induces an eddy current inside of the electrically conductive sections of the first spool 6. Due to the ohmic resistance, part of the yielded energy is transformed into heat. Hence, the result is a resistance against rotation of the first spool 6 which then again results in an initial tension of the film 5. The closer the permanent magnet 28 is positioned on the first spool 6, the greater the resistance. In an alternative embodiment, the permanent magnet 28 can be formed as an electromagnet.

## Claims

1. A plastic film (5) used for the purpose of depositing and transporting of thin slices of samples in the field of light microscopy.

2. Plastic film according to claim 1 used for the purpose of depositing and transporting of thin slices of samples while cutting the slices with a microtome (1).

3. Plastic film according to claim 1 used for the purpose of depositing and transporting of samples while analysing the slices in a light microscope.

4. Plastic film according to claim 1 used for the purpose of depositing and transporting of samples while analysing the slices in a transmitted light microscope.

5. Plastic film according to any of claims 1 to 4, **characterised in that** the film (5) is made of polypropylene.

6. Plastic film according to any of claims 1 to 5, **characterised in that** the film (5) is made of a oriented polypropylene.

7. Plastic film according to any of claims 1 to 6, **characterised in that** the film (5) is made of a biaxially oriented polypropylene.

8. Plastic film according to any of claims 1 to 7, **characterised in that** the film (5) comprises at least two layers.

9. Plastic film according to claim 8, **characterised in that** the first layer is made of a biaxially oriented polypropylene and the second layer is made of a polypropylene.

10. Plastic film according to claim 8 or 9, **characterised in that** the film comprises three layers, wherein the first layer is made of a biaxially oriented polypropylene, wherein the first layer is covered by a second layer and a third layer, wherein the second layer and the third layer are made of a polypropylene.

11. Plastic film according to claim 10, **characterised in that** the samples are placed on the free surface of the first layer.

12. Plastic film according to any of claims 1 to 11, **characterised in that** the film (5) is transparent.

13. Plastic film according to any of claims 1 to 12, **characterised in that** the film is hydrophilically furnished.

14. Plastic film according to claim 13, **characterised in that** at least one surface is treated by corona treatment.

15. Plastic film according to any of claims 1 to 14, **characterised in that** the thickness of the film (5) is between 20 µm and 40 µm.
